# EUROPÄISCHE PATENTSCHRIFT

(11) **EP 2 507 522 B1**
(45) Veröffentlichungstag und Bekanntmachung des Hinweises auf die Patenterteilung: **17.08.2016**
(21) Anmeldenummer: 10805685.4
(22) Anmeldetag: 03.12.2010
(51) Int. Cl.: F16C 19/16, F16C 33/58

(54) **KUGELLAGER**
BALL BEARING
ROULEMENT À BILLES

(30) Priorität: 04.12.2009 DE 102009056824; 31.03.2010 DE 102010013741
(43) Veröffentlichungstag der Anmeldung: 10.10.2012
(73) Patentinhaber: IMO Holding GmbH, 91350 Gremsdorf (DE)
(72) Erfinder: HUBERTUS, Frank, 91315 Höchstadt (DE)
(74) Vertreter: Küchler, Stefan
(86) Internationale Anmeldenummer: PCT/EP2010/007339
(87) Internationale Veröffentlichungsnummer: WO 2011/066979

(56) Entgegenhaltungen:
- DE-A1- 3 607 479
- DE-A1- 4 435 831
- DE-A1- 10 327 641
- DE-C1- 10 011 464
- DE-C1- 19 854 277
- US-A- 1 587 184
- US-A- 3 370 899
- US-A- 6 116 786
- US-B1- 6 367 980

## Beschreibung

Die Erfindung richtet sich auf ein Kugellager mit einem ersten und einem zweiten Laufring und wenigstens einer Reihe von in dem Spalt zwischen beiden Laufringen angeordneten Kugeln vom Radius R_{K}, welche entlang von einander zugewandten Laufbahnen der beiden Laufringe abrollen, wobei sich die Mittelpunkte der Kugeln einer Reihe auf einer Kreisbahn bewegen, die von einem sämtlichen Kugeln dieser Reihe umbeschriebenen Torus umgeben ist mit dem toroidalen Radius R_{K}, einer toroidalen Winkelkoordinate ϕ und einer poloidalen Winkelkoordinate θ, und wobei jede Laufbahn mit jeder Kugel je zwei nahezu punktförmige Berührungsbereiche oder Berührungspunkte P₁, P₂; P₃ P₄ aufweist unter dem jeweiligen Tragwinkel O_{P1}, θ_{P2}; θ_{P3} und θ_{P4}, und wobei im Bereich der Tragwinkel θ_{P1}, θ_{P2}; θ_{P3} und θ_{P4} die Laufbahnquerschnitte Querwölbungen aufweisen mit endlichen Wölbungsradien R_{L1} ... R_{L4}, welche jeweils größer sind als der Kugelradius R_{K}: R_{Lv} > R_{K}, und wobei der Querwölbungsradius R_{L} der Laufbahn(en) in der Umgebung der Tragwinkel θ_{P1}, θ_{P2}; θ_{P3} und θ_{P4} jeweils eine stetige und differenzierbare Funktion der poloidalen Winkelkoordinate θ ist: R_{L} = R_{L}(θ), wobei ferner beide Laufringe jeweils eine ebene Anlagefläche zum Anschluß an ein Fundament, Chassis oder sonstiges Maschinen- oder Anlagenteil aufweisen sowie darin kranzförmig verteilt angeordnete Befestigungsbohrungen zwecks Verbindung mit dem betreffenden Fundament, Chassis oder sonstiges Maschinen- oder Anlagenteil.

Derartige Vierpunktlager gibt es in verschiedenen Bauformen, bspw. als ein- oder mehrreihiges Kugellager. Nicht selten weisen die dabei verwendeten Laufbahnen ein gotisches Profil auf, d.h. die Querwölbung folgt abschnittsweise je einem Kreisbahnausschnitt; zwei derartige Kreisbahnsegmente schließen jedoch etwa auf der Mitte der Bahn einen spitzen Winkel miteinander ein, entsprechend einem gotischen Bogen. Dadurch ist es möglich, trotz Wölbungsradien R_{L1} ... R_{L4}, welche jeweils größer sind als der Kugelradius R_{K}: R_{Lv} > R_{K}, zwei Berührungspunkte zwischen einer Laufbahn und einer Kugel zu realisieren.

Der poloidale Winkel, an dem sich ein Berührungspunkt oder -bereich einstellt, wird im Allgemeinen als Tragwinkel bezeichnet. Häufig liegen die Tragwinkel etwa zwischen 40° und 50°, insbesondere bei etwa 45°, bzw. zwischen -40° und -50°, insbesondere bei etwa -45°, bezogen auf die durch die Kugelmittelpunkte einer Reihe verlaufende Ebene.

Infolge dieser bevorzugten Lage der Tragwinkel ergeben sich bei der Übertragung von Lasten stets Lastkomponenten in axialer und radialer Richtung. Selbst bei einer rein axialen Belastung ergeben sich dadurch stets auch radiale Lastkomponenten, welche bei großem Lagerdurchmesser von bspw. mehr als 0,5 m, vorzugsweise 1,0 m oder mehr, insbesondere 2,0 m oder mehr, zu einer radialen Aufweitung des Außenrings einerseits und zu einer Einschnürung des Innenrings andererseits führen.

Bei kombinierter Belastung, also überlagerten Axial-, Radial- und/oder Kippmomentbelastungen, ergeben sich Verformungen der Laufringe in Form je einer Ellipse. Dort, wo die höchste Belastung übertragen wird, weitet sich der äußere Laufring am stärksten auf und der innere Laufring schnürt sich am stärksten ein. Beide Lagerringe verformen sich dabei zu Ellipsen, deren Hauptachsen jedoch gegeneinander verdreht sind, insbesondere um etwa 90°, so dass bspw. die großen Halbachsen des äußeren Lagerrings etwa mit den kleinen Halbachsen des inneren Lagerrings zusammenfallen und demnach die Weite des Spaltes zwischen beiden Lagerringen in Abhängigkeit vom toroidalen Winkel ϕ variiert.

Da sich die beiden Lagerringe in denjenigen Bereichen, wo die höchste Belastung übertragen wird, relativ zueinander am weitesten aufweiten, verschieben sich die Tragwinkel an diesen Stellen am stärksten. Dabei können sich je nach Verformung und Steifigkeit der Anschlußkonstruktion die Tragwinkel bis hin zu ± 65° oder ± 70°, sogar bis ± 75° oder noch darüber hinaus verschieben.

Bei starken Beanspruchungen oder einer gewissen Vorspannung ergibt sich anstelle eines Berührungspunktes zwischen Kugel und Lauffläche ein flächiger Berührungsbereich, vorzugsweise von etwa elliptischer Form, die sog. Druckellipse. Wenn sich bei einer großen Verschiebung der Tragwinkel dieser Berührungsbereich bzw. die Druckellipse dem Lagerspalt nähert, kann sie durch die Kante zwischen Laufbahn und Lagerspalt beschnitten wird. Tritt dieser Fall ein, so steigt nicht nur die Belastung der Kugel in dem verbleibenden Kontaktbereich, sondern es ergeben sich insbesondere auch erhöhte Kantenpressungen, welche rasch zu einer Beschädigung der Kugeln und Laufbahnen führen. Dieser Effekt ist um so stärker, je größer der Durchmesser des Kugellagers ist, und je geringer die Struktursteifigkeit einer Anschlußkonstruktion ist. Bei ungünstigen Verhältnissen muß daher anstelle eines Vierpunktlagers eine aufwendigere und teurere Lagerbauform gewählt werden, bspw. ein mehrreihiges Rollenlager mit wenigstens einer Rollenreihe mit einem Tragwinkel von 90° für Axial- und Kippmomentbelastungen sowie mit wenigstens einer Rollenreihe mit einem Tragwinkel von 0° zur Übertragung von Radialbelastungen.

Diese Problematik ist sehr deutlich in der deutschen Patentschrift DE 100 11 464 C1 beschrieben, die ein gattungsgemäßes Kugellager zum Inhalt hat, welches insbesondere der Lagerung eines verstellbaren Rotorblattes an der Rotornabe einer Windenergieanlage dient. Die dortigen, kugelförmigen Wälzkörper weisen jeweils vier punktförmige Berührungsbereiche oder Berührungspunkte zu den Lagerringen auf. Dort ist als nachteilig beschrieben, dass ein querschnittlicher Laufbahndurchmesser, welcher um 6 % vom Kugeldurchmesser abweicht, eine Verschiebung des Kugel-Druckwinkels in der Laufrille von 45° bis hin zu 85° zur Folge hat, wenn sich die Lagerringe nur um 0,56 mm radial gegeneinander verschieben; die Kugeln rollen dann nur noch auf den Kanten der Lagerringe bzw. Laufbahnen ab. Die in diesem Dokument vorgeschlagene Lösung des Problems besteht darin, drei Ringe konzentrisch ineinander anzuordnen, so dass sich zwei Spalte ergeben, und in jedem dieser beiden Spalte jeweils eine Reihe von kugelförmigen Wälzkörpern vorzusehen. Zwar erweisen sich insgesamt drei Ringe stabiler als nur zwei Ringe; die Lageranordnung erhält dadurch jedoch auch ein deutlich höheres Gewicht und Bauvolumen, was in vielen Anwendungsfällen unerwünscht ist.

Aus dem U.S.-Patent 6,367,980 B1 ist ein Kugellager mit zwei Ringen offenbart, wobei die kugelförmigen Wälzkörper jedoch nur an einem dieser beiden Ringe eine Laufbahn mit einem rillenförmigen Querschnitt vorfinden, während die Laufbahn des gegenüber liegenden Ringes nach Art einer abgerundeten Auskehlung gestaltet ist und also nur einen Berührungspunkt bietet, so dass pro Wälzkörper insgesamt nur drei Kontaktpunkte existieren. Zur Gewährleistung der Übertragung von Axialkräften in beiden axialen Richtungen sind daher zwei Reihen von kugelförmigen Wälzkörpern vorgesehen, was jedoch ebenfalls das Gewicht und Bauvolumen erhöht.

Aus den Nachteilen des beschriebenen Standes der Technik resultiert das die Erfindung initiierende Problem, ein gattungsgemäßes Kugellager derart weiterzubilden, dass die beschriebenen Nachteile bekannter Vierpunktlager vermieden werden. Insbesondere wäre es wünschenswert, die Anordnung derart zu treffen, dass sich trotz starker Belastung die Tragwinkel des Vierpunktlagers nicht allzu weit von ihrer normalen Lage entfernen.

Die Lösung dieses Problems gelingt dadurch, dass die Laufbahnkontur im Bereich der Tragwinkel, d.h., bei θ_{Pv} - 5° ≤ θ ≤ θ_{Pv} + 5°, jeweils eine Schmiegung S = (R_{K}/R_{L})*100% zwischen 98 % bis 90 % aufweist, wobei die Funktion R_{L}(θ)von dem jeweiligen Tragwinkelbereich θ_{P1}, θ_{P2}; θ_{P3} und θ_{P4} ausgehend in beiden poloidalen Richtungen jeweils zunimmt: R_{L}(θ) ≥ R_{L}(θ_{Pv}), ggf. sogar bis hin zu konvexen Querwölbungsradien R_{L}(θ) < 0.

Demnach weicht die Oberfläche der Laufbahn jeweils von einem voreingestellten Tragwinkel θ_{P1}, θ_{P2}; θ_{P3} und θ_{P4} in beiden poloidalen Richtungen gegenüber einem kreisförmigen Querschnittsverlauf, wie er bspw. bei einem Torus vorzufinden ist, zurück. Obwohl diese Zurückweichung nicht sehr groß sein muß, hat sie doch den Effekt, dass sich bei einer Verformung der Ringe bspw. infolge äußerer Radial- oder Axialkräfte oder Kippmomente die tatsächlichen Tragwinkel weniger verschieben als bei einem kreisförmigen Querschnittsverlauf der Laufbahnen, insbesondere nicht zu extrem hohen Werten im Bereich von 75° oder mehr. Die Laufbahnkante ist daher selbst bei sehr hohen Belastungen und geringer Steifigkeit der Anschlußkonstruktion nicht überlastet.

Ein Effekt der geringeren Tragwinkelverschiebung ist, dass die Kugeln mit geringeren Gleitanteilen entlang der Laufbahnen abrollen können. Infolge eines geringeren Gleitanteils verbessert sich das gesamte Abrollverhalten der Kugeln, so dass der Verschleiß der Laufbahn reduziert und die praktisch nutzbare Lebensdauer des Kugellagers verlängert wird.

Aufgrund der besseren Abrolleigenschaften ist außerdem der Drehwiderstand eines derartigen Kugellagers geringer als bei einem konventionellen Vierpunktlager. Damit kann bei motorisch angetriebenen Geräten, Maschinen oder Anlagen auf einen schwächeren, d.h. preisgünstigeren Antrieb zurückgegriffen werden; der Energieverbrauch sinkt, wodurch die Umwelt geschont wird. Beim Einsatz in Wind- oder Wasserkraftanlagen wird dadurch der Eigenverbrauch an Energie reduziert und damit der Wirkungsgrad gesteigert.

Aufgrund der obigen Vorschrift kann die Laufbahnquerwölbung also konkav sein mit einem Querwölbungsradius R_{L} größer als dem Kugelradius R_{K}, sowie zumindest bereichsweise konvex mit einem Querwölbungsradius R_{L} kleiner als 0. Der dazwischen liegende Wertebereich [0;R_{K}] ist jedoch ausgenommen bzw. für den Querwölbungsradius R_{L} ungeeignet.

Indem beide Laufringe jeweils eine ebene Anlagefläche zum Anschluß an ein Fundament, Chassis oder sonstiges Maschinen- oder Anlagenteil aufweisen, wird einerseits die von dem erfindungsgemäßen Kugellager geleistete (Dreh-) Führung auf die betreffenden Anlagenteile übertragen. Andererseits kann auf diesem Weg ein massives und dadurch stabiles Anschlußelement seine Struktursteifigkeit auf das Kugellager übertragen, um dieses vor Verformungen und sonstigen Überlastungen zu schützen.

Ferner weisen die ebenen Anlageflächen Befestigungsmittel zur Verbindung mit einem Fundament, Chassis oder sonstigem Maschinen- oder Anlagenteil auf. Erst dadurch wird ein Kräfteaustausch zwischen dem erfindungsgemäßen Kugellager und einem Anschlußelement ermöglicht. Diese Befestigungsmittel sind als kranzförmig verteilte Bohrungen ausgestaltet. Eine größere Anzahl derartiger, vorzugsweise äquidistant über einen Lagerring verteilter Befestigungsbohrungen schafft eine innige Verbindung zwischen den betreffenden Teilen, wodurch Axial- und Kippkräfte und - über den durch die zusammengepreßten Teile verursachten Reibschluß auch Drehmomente und Radialkräfte übertragen werden können.

Im Bereich der Tragwinkel, d.h., bei θ_{Pv} - 5° ≤ θ ≤ θ_{Pv} + 5°, weist die Laufbahnkontur jeweils eine Schmiegung S = (R_{K}/R_{L})*100% zwischen 98 % bis 90 % auf; vorzugsweise liegt die Schmiegung S sogar in einem Bereich von 97 % bis 92 %, insbesondere in einem Bereich von 96 % bis 94 %. Derart hohe Schmiegungen - wobei also der Querwölbungsradius R_{L} der Laufbahn nur um wenige Prozent größer ist als der Kugelradius R_{K} - würden bei einem konventionellen Vierpunktlager schnell zu einer starken Verschiebung der Tragwinkel infolge von Lagerbelastungen führen und können daher nur in Verbindung mit dem erfindungsgemäßen Lehre erreicht werden.

Es hat sich als günstig erwiesen, dass die Laufbahnkontur eine endliche Schmiegung S = (R_{K}/R_{L})*100% ≠ 0 aufweist, ggf. mit Ausnahme von Wendepunkten der Laufbahnkontur. Die Schmiegung ist dabei definiert als Verhältnis aus Kugelradius R_{K} und lokalem Querwölbungsradius R_{L} der Laufbahn, multipliziert mit 100 % und verändert sich daher bei einem erfindungsgemäßen Kugellager in Abhängigkeit von dem poloidalen Winkel θ.

Die Erfindung läßt sich dahingehend weiterbilden, dass die Laufbahnkontur in der Nähe des Lagerspalts eine Schmiegung S = (R_{K}/R_{L})*100% zwischen 90 % bis 50 % aufweist, vorzugsweise eine Schmiegung S von 90 % bis 60 %, insbesondere eine Schmiegung S von 90 % bis 70 %. Wie man daraus ersehen kann, darf der Querwölbungsradius R_{L} der Laufbahn im Bereich des Lagerspalts erheblich größer sein als der Kugelradius, bspw. um 10 % bis 50 %. Dank der erfindungsgemäßen Konstruktion werden diese Bereiche der Laufbahn von den Kugeln so gut wie niemals berührt.

Es liegt im Rahmen der Erfindung, dass die Querwölbung der Laufbahn(en) in der Umgebung der Tragwinkelbereiche θ_{P1}, θ_{P2}; θ_{P3} und θ_{P4} keine kreisförmige Kontur aufweist, insbesondere auch nicht abschnittsweise. Eben durch die Abkehr von einer kreisförmigen Kontur lassen sich erfindungsgemäß die gestellten Probleme lösen.

Die Erfindung sieht weiterhin vor, dass die Querwölbung der Laufbahnkontur in der Umgebung der Tragwinkelbereiche θ_{P1}, θ_{P2}; θ_{P3} und θ_{P4} einer stetigen und differenzierbaren Funktion folgt, vorzugsweise einer Potenz- oder Polynomfunktion, bspw. P(θ) = a₀ + a₁*θ + a₂*θ² + .. + aₙ*θⁿ, oder einer Exponentialfunktion, bspw. E(θ) = e^{f(θ)}, oder einer Ellipsenkurve oder einer Summenfunktion S(θ) = ∑ fᵥ(θ) oder einer sonstigen Kombination von zwei oder mehr derartigen Funktionen. Wichtig ist die Stetigkeit und Differenzierbarkeit im Bereich der Tragwinkel θ_{P1}, θ_{P2}; θ_{P3} und θ_{P4} und deren Umgebungen.

Eine besonders einfache Anordnung ergibt sich, wenn die Querwölbung der Laufbahnkontur symmetrisch ist. Die Symmetrieebene verläuft dann innerhalb der Ringebene, und zwar mittig zwischen den zwei Berührungspunkten einer Kugel mit einer Laufbahn.

Andererseits kann die Querwölbung der Laufbahnkontur auch asymmetrisch sein, bspw. falls die axiale Belastung des Lagers asymmetrisch ist, d.h. überwiegend in einer axialen Richtung auftritt.

Die Erfindung läßt sich dahingehend weiterbilden, dass die Querwölbung der Laufbahnkontur wenigstens einen Wendepunkt aufweist. Ein solcher Wendepunkt bedeutet eine Änderung der Laufbahnquerwölbung über R_{L} = ∞ hinweg und von R_{L} = - oo weiter zu einer negativen Querwölbung mit kleiner werdendem Krümmungsradius, d.h., die Laufbahnquerwölbung ist ab dem Wendepunkt bzw. jenseits desselben nicht mehr konkav wie in der unmittelbaren Umgebung des Tragwinkels, sondern wird ab dort dann konvex.

In Weiterverfolgung dieses Erfindungsgedankens kann ferner vorgesehen sein, dass sich wenigstens ein Wendepunkt der Querwölbung der Laufbahnkontur in der Nähe des Lagerspalts befindet, also deutlich von dem betreffenden Tragwinkel θᵥ entfernt. Die Schmiegung S könnte dort dann sogar negativ werden, wodurch die Ausbildung einer scharfen Kante vermieden wird, was ebenfalls eine Maßnahme zur Steigerung der erreichbaren Betriebsdauer darstellt.

Bevorzugt handelt es sich bei dem Kugellager um ein Radiallager.

Die der Befestigung dienenden Bohrungen können sowohl als Durchgangs- oder als Sacklochbohrungen ausgebildet sein. Bevorzugt dienen sie der Fixierung mittels durchgesteckter oder eingeschraubter Maschinenschrauben, Gewindebolzen od. dgl.

Zu diesem zweck sieht eine erfindungsgemäße Konstruktionsvorschrift vor, die Bohrungen, insbesondere Sacklochbohrungen, mit einem Innengewinde zu versehen. Bei Durchgangsbohrungen können stattdessen zur Festlegung auf das durchgesteckte Ende aufgeschraubte Kontermuttern verwendet werden.

Es hat sich bewährt, dass die ebenen Anlageflächen beider Laufringe zum Anschluß an je ein Fundament, Chassis oder sonstiges Maschinen- oder Anlagenteil an beiden Laufringen in entgegengesetzten (Achs-) Richtungen weisen. Durch diese Maßnahme bildet die Ebene des erfindungsgemäßen Kugellagers quasi eine Trennungsebene zwischen den gegeneinander verdrehbaren Maschinen- oder Anlagenteilen, wobei sich ein Anlagenteil oberhalb der Kugellagerebene und das andere unterhalb derselben befindet.

Weitere Vorteile ergeben sich dadurch, dass die ebene Anlagefläche eines Laufrings zum Anschluß an je ein Fundament, Chassis oder sonstiges Maschinen- oder Anlagenteil in (Achs-) Richtung des Kugellagers gegenüber der betreffenden Ringfläche des anderen Laufrings erhaben ist. Dadurch wird einem Entlangstreifen der nicht als Anschlußfläche dienenden Stirnseite eines Lagerrings an dem betreffenden Anlagenteil vorgebeugt.

Schließlich entspricht es der Lehre der Erfindung, dass die ebenen Anlageflächen beider Laufringe zum Anschluß an je ein Fundament, Chassis oder sonstiges Maschinen- oder Anlagenteil an beiden Laufringen in entgegengesetzten (Achs-) Richtungen gegeneinander versetzt sind, also bspw. die obere Anschlußfläche nach oben, die untere dagegen nach unten. Dadurch ist es möglich, dass beide Lagerringe etwa die gleiche Höhe aufweisen und damit etwa den selben Querschnitt sowie schließlich auch eine annähernd identische Stabilität.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: einen Querschnitt durch ein erfindungsgemäßes Kugellager, teilweise abgebrochen;
- Fig. 2: eine Vergrößerung des Details II aus Fig. 1; sowie
- Fig. 3: eine andere Ausführungsform der Erfindung, etwa in einer der Fig. 2 entsprechenden Darstellung.

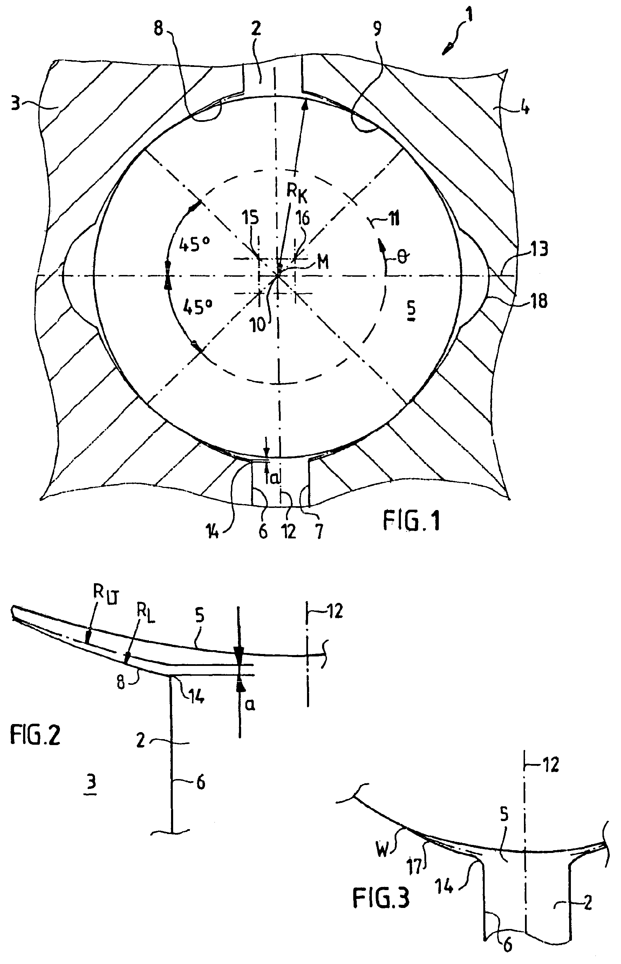

Der Schnitt gemäß Fig. 1 führt quer durch ein erfindungsgemäßes Kugellager 1, und ist dabei beschränkt auf jeweils eine Ringhälfte des Kugellagers 1 und begrenzt auf ein Detail in der Umgebung des Spaltes 2 zwischen den beiden Kugellagerringen 3, 4, worin eine Kugel 5 mit dem Kugelradius R_{K} stellvertretend für eine Kugelreihe zu sehen ist sowie deren Umgebung. Bei dem dargestellten Kugellager 1 handelt es sich um ein Radiallager, wobei die Lagerdrehachse vertikal verläuft, allerdings - bedingt durch den großen Durchmesser des erfindungsgemäßen Kugellagers 1 - weit jenseits einer vertikalen Kante des Zeichenblattes. Dabei entspricht bspw. der links in abgebrochener Form dargestellte Ring 3 dem Außenring, und der rechts ebenfalls abgebrochen wiedergebene Ring 4 dem Innenring; die Kugellagerdrehachse wäre dann rechts außerhalb des sichtbaren Zeichenbereichs. Für die vorliegende Erfindung ist allerdings die Frage, welches der Innenring ist und welches der Außenring, von untergeordneter Bedeutung.

Es ist deutlich zu erkennen, dass die jeweils dem Spalt 2 zugewandte Fläche 6, 7 der beiden Lagerringe 3, 4 jeweils eine rundum laufende Laufbahn-Vertiefung 8, 9 aufweist. Die Kugeln 5 finden in diesem beiden Laufbahn-Vertiefungen 8, 9 Platz, so dass die Breite B des Spaltes 2 zwischen den beiden Lagerringen 3, 4 kleiner ist als der Kugeldurchmesser D_{K} = 2 * R_{K}, vorzugsweise sogar kleiner als der Kugelradius R_{K}.

Während die Kugeln 5 zwischen den beiden Laufbahnen 8, 9 abrollen, bewegen sich ihre Mittelpunkte M auf einer Kreisbahn 10, welche in Fig. 1 die Zeichenebene lotrecht durchsetzt. Die Kugelkörper bewegen sich dabei innerhalb eines gedachten Torus, der die Kreisbahn 10 mit konstantem toroidalem Radius R_{K} umgibt. Die Punkte auf der Oberfläche dieses gedachten Torus lassen sich identifizieren mittels eines Koordinatensystems, bestehend aus der toroidalen Winkelkoordinate ϕ und der poloidalen Winkelkoordinate θ. Der toroidale Winkel ϕ wird entlang der Kreisbahn 10 gemessen, der poloidale Winkel θ entlang einer Kreisbahn 11, deren Ebene jeweils lotrecht von der Kreisbahn 10 durchsetzt wird; in Fig. 1 liegt diese Kreisbahn 11 in der Zeichenebene. Verallgemeinert man den toroidalen Radius R_{K} zu einer Radialkoordinate r, so kann das die Oberfläche des gedachten Torus bedeckende Koordinatensystem ϕ, θ auf den gesamten dreidimensionalen Raum extrapoliert werden, zumindest in der Umgebung des gedachten Torusbzw. Innerhalb des Kugellagers 1. Daher kann jedem Punkt des Kugellagers 1 und damit auch jedem Punkt der beiden Laufbahnen 8, 9 jeweils ein toroidaler Winkel ϕ und ein poloidaler Winkel θ zugeordnet werden.

Das in Fig. 1 dargestellte Kugellager 1 weist symmetrische Laufbahnen 8, 9 auf, was allerdings nicht unbedingt zwingend ist. Dies bedeutet bei dem dargestellten Beispiel, dass die Querschnitte der beiden Laufbahnkonturen 8, 9 zueinander symmetrisch sind, und zwar bezüglich einer ersten Symmetrieachse 12, die mittig entlang des Spaltes 2 verläuft, also gleiche Abstände zu den beiden einander zugewandten Flächen 6, 7 der beiden Lagerringe 3, 4 einhält. Lotrecht zu dieser Symmetrieachse 12, und zwar auf Höhe des Kugelmittelpunktes M bzw. der Kreisbahn 10, verläuft eine zweite Symmetrieachse 13; diese Symmetrieachse 13 verläuft damit parallel zu der Grundebene des Kugellagers 1. Wie man Fig. 1 entnehmen kann, bilden diese Symmetrieachsen 12, 13 eine Art Koordinatenkreuz eines lokalen kartesischen Koordinatensystems, dessen dritte Koordinatenachse die Tangente an die Kreisbahn 10 wäre. Der poloidale Winkel θ wird vorzugsweise von der in Fig. 1 horizontal verlaufenden Koordinatenachse 13 aus gezählt, also von derjenigen Koordinatenachse, welche radial zum Mittelpunkt der Kugellagerringe 3, 4 bzw. zu der Drehachse des Kugellagers 1 hin verläuft.

Durch die Symmetrieachse 13 werden die beiden Laufbahnen 8, 9 jeweils in zwei Abschnitte unterteilt, nämlich in einen oberen Abschnitt und einen unteren Abschnitt, welche vorzugsweise symmetrisch zueinander sind bezüglich der Symmetrieachse 13.

Im Querschnitt gemäß Fig. 1 ergeben sich durch die einander schneidenden Symmetrieachsen 12, 13 insgesamt vier Quadranten. Beide Laufbahnen 8, 9 sind nun derart gestaltet, dass in jedem dieser vier Quadranten je ein Berührungspunkt einer Laufbahn 8, 9 mit der Kugel 5 liegt, nämlich die Berührungspunkte P₁, P₂, P₃ und P₄, welche jeweils unter den poloidalen Winkeln, den sogenannten Tragwinkeln, zu finden sind.

In Fig. 1 ist der von äußeren Kräften freie Zustand des Kugellagers 1 zu sehen, wobei die Tragwinkel θ₁, θ₂, θ₃ und θ₄ sich bei den dafür vorgesehenen Werten befinden, im dargestellten Beispiel jeweils um einen Tragwinkel von etwa ± 45° von der mittigen Lagerebene 13 nach oben bzw. nach unten versetzt, entsprechend der Anordnung eines Vierpunktlagers.

In der Umgebung dieser Tragwinkel, also bspw. innerhalb der Bereiche [θ₁ - Δ, θ₁ + Δ], [θ₂ - Δ, θ₂ + Δ], [θ₃ - Δ, θ₃ + Δ], und [θ₄ - Δ, θ₄ + Δ], bspw. mit Δ = 1° oder Δ = 2° oder Δ = 5° od. dgl., haben die Laufbahnen 8, 9 je einen Querwölbungsradius von R_{LT} ≈ R_{K}, jedoch geringfügig größer als jener: R_{LT} > R_{K}. Die dortige Schmiegung S liegt bei 98 % bis 90 %.

Von diesen Bereich aus erhöht sich der Querwölbungsradius R_{L} zunehmend, und zwar gemäß einer stetigen und differenzierbaren Funktion. Demzufolge weichen die Konturen der Laufbahnen 8, 9 von den Tragwinkelbereichen [θ₁ - Δ, θ₁ + Δ], [θ₂ - Δ, θ₂ + Δ], [θ₃ - Δ, θ₃ + Δ], und [θ₄ - Δ, θ₄ + Δ] aus in beiden Richtungen nach außen (bezogen auf den Kugelmittelpunkt M) gegenüber einer Kreislinie mit Radius R_{LT} zurück, da in diesen Bereichen jenseits bzw. fern der Tragwinkelbereiche gilt: R_{L} > R_{LT}.

Man kann in Fig. 2 erkennen, dass sich dadurch im Bereich der Laufbahnkante 14, also dort, wo eine Laufbahn 8, 9 in die Begrenzungsflächen 6, 7 des Spaltes 2 übergeht, eine Abweichung a > 0 gegenüber der in Fig. 2 gestrichelt eingetragenen Kreislinie mit dem Radius R_{LT} ergibt. Aufgrund dieses Zurückweichens fällt auch der hypothetische Mittelpunkt der lokalen Querwölbung einer Laufbahn 8, 9 außerhalb der Tragwinkelbereiche [θ₁ - Δ, θ₁ + Δ], [θ₂ - Δ, θ₂ + Δ], [θ₃ - Δ, θ₃ + Δ], und [θ₄ - Δ, θ₄ + Δ] nicht mit der Kreislinie 10 bzw. dem Kugelmittelpunkt zusammen, sondern weicht zusehends von diesem ab. Mehrere derartige, abweichende Krümmungsmittelpunkte 15, 16 sind in Fig. 1 eingetragen. Im Bereich der Laufbahnkante 14 liegt die Schmiegung S nur noch bei 90 % bis 50 %.

In Fig. 3 ist eine weiter abgewandelte Ausführungsform der Erfindung wiedergegeben, wobei sich in der Querschnittskontur einer Laufbahn 8, 9 ein Wendepunkt W ergibt und die Laufbahn 8, 9 jenseits desselben zumindest bereichsweise einen konvex gekrümmten Querwölbungsverlauf aufweist. Dieser konvexe Bereich 17 kann sich entweder bis zu der Laufbahnkante 14 erstrecken oder nach einem weiteren Wendepunkt alsdann wieder durch eine konkave Kurve fortgesetzt werden.

Im Bereich des Äquators der Kugel 5, d.h. bei der zur Lagergrundebene parallelen Symmetrieachse 13, weisen die Laufbahnen 8, 9 je eine flache, rillenförmige Vertiefung 18 auf, die als Vorratstasche für Schmierfett dienen kann.

### Bezugszeichenliste

- 1: Kugellager
- 2: Spalt
- 3: Lagerring
- 4: Lagerring
- 5: Kugel
- 6: Fläche
- 7: Fläche
- 8: Laufbahn
- 9: Laufbahn
- 10: Kreisbahn
- 11: Kreisbahn
- 12: Symmetrieachse
- 13: Symmetrieachse
- 14: Laufbahnkante
- 15: verschobener Mittelpunkt
- 16: verschobener Mittelpunkt
- 17: Bereich
- 18: rillenförmige Vertiefung

## Patentansprüche

1. Kugellager (1) mit einem ersten und einem zweiten Laufring (3,4) und wenigstens einer Reihe von in dem Spalt (2) zwischen beiden Laufringen (3,4) angeordneten Kugeln (5) vom Radius R_{K}, welche entlang von einander zugewandten Laufbahnen (8,9) der beiden Laufringe (3,4) abrollen, wobei sich die Mittelpunkte (M) der Kugeln (5) einer Reihe auf einer Kreisbahn (10) bewegen, die von einem sämtlichen Kugeln (5) dieser Reihe umbeschriebenen Torus umgeben ist mit dem toroidalen Radius R_{K}, einer toroidalen Winkelkoordinate ϕ und einer poloidalen Winkelkoordinate θ, und wobei jede Laufbahn (8,9) mit jeder Kugel (5) je zwei nahezu punktförmige Berührungsbereiche oder Berührungspunkte (P₁, P₂; P₃ P₄) aufweist unter dem jeweiligen Tragwinkel (θ_{P1}, θ_{P2}; θ_{P3} und θ_{P4}), und wobei im Bereich der Tragwinkel (θ_{P1}, θ_{P2}; θ_{P3} und θ_{P4}) die Laufbahnquerschnitte Querwölbungen aufweisen mit endlichen Wölbungsradien (R_{L1} ... R_{L4}), welche jeweils größer sind als der Kugelradius (R_{K}): R_{Lv} > R_{K}, wobei der Querwölbungsradius (R_{L}) der Laufbahn(en) (8,9) in der Umgebung der Tragwinkel (θ_{P1}, θ_{P2}; θ_{P3} und θ_{P4}) jeweils eine stetige und differenzierbare Funktion der poloidalen Winkelkoordinate θ ist: R_{L} = R_{L}(θ), wobei beide Laufringe (3,4) jeweils eine ebene Anlagefläche zum Anschluß an ein Fundament, Chassis oder sonstiges Maschinen- oder Anlagenteil aufweisen sowie darin kranzförmig verteilt angeordnete Befestigungsbohrungen zwecks Verbindung mit dem betreffenden Fundament, Chassis oder sonstiges Maschinen- oder Anlagenteil, **dadurch gekennzeichnet, dass**
a) die Laufbahnkontur im Bereich der Tragwinkel, d.h., bei θ_{Pv} - 5° ≤ θ ≤ θ_{Pv} + 5°, jeweils eine Schmiegung S = (R_{K}/R_{L})*100% zwischen 98 % bis 90 % aufweist, wobei
b) die Funktion R_{L}(θ) von dem jeweiligen Tragwinkelbereich (θ_{P1}, θ_{P2}; θ_{P3} und θ_{P4}) ausgehend in beiden poloidalen Richtungen jeweils zunimmt: R_{L}(θ) ≥ R_{L}(θ_{Pv}), ggf. sogar bis hin zu konvexen Querwölbungsradien R_{L} < 0.

2. Kugellager (1) nach Anspruch 1, **dadurch gekennzeichnet, dass** die Laufbahnkontur eine endliche Schmiegung S = (R_{K}/R_{L}*100% ≠ 0 aufweist, ggf. mit Ausnahme von Wendepunkten (W) der Laufbahnkontur.

3. Kugellager (1) nach Anspruch 1 oder 2, **dadurch gekennzeichnet, dass** die Laufbahnkontur im Bereich der Tragwinkel, d.h., bei θ_{Pv} - 5° ≤ θ ≤ θ_{Pv} + 5°, jeweils eine Schmiegung S = (R_{K}/R_{L})*100% von 97 % bis 92 % aufweist, insbesondere eine Schmiegung S von 96 % bis 94 %.

4. Kugellager (1) nach einem der vorhergehenden Ansprüche, **dadurch gekennzeichnet, dass** die Laufbahnkontur in der Nähe des Lagerspalts (2) eine Schmiegung S = (R_{K}/R_{L})*100% zwischen 90 % bis 50 % aufweist, vorzugsweise eine Schmiegung S von 90 % bis 60 %, insbesondere eine Schmiegung S von 90 % bis 70 %.

5. Kugellager (1) nach Anspruch 1, **dadurch gekennzeichnet, dass** die Querwölbung der Laufbahn(en) in der Umgebung der Tragwinkelbereiche θ_{P1}, θ_{P2}; θ_{P3} und θ_{P4} keine kreisförmige Kontur aufweist, insbesondere auch nicht abschnittsweise.

6. Kugellager (1) nach einem der vorhergehenden Ansprüche, **dadurch gekennzeichnet, dass** die Querwölbung der Laufbahnkontur in der Umgebung der Tragwinkelbereiche θ_{P1}, θ_{P2}; θ_{P3} und θ_{P4} einer stetigen und differenzierbaren Funktion folgt, vorzugsweise einer Potentialfunktion oder einer Reihe oder einer Exponentialfunktion oder elliptischen Kontur oder einer Kombination von zwei oder mehr derartigen Funktionen.

7. Kugellager (1) nach einem der vorhergehenden Ansprüche, **dadurch gekennzeichnet, dass** die Querwölbung der Laufbahnkontur symmetrisch ist.

8. Kugellager (1) nach einem der Ansprüche 1 bis 6, **dadurch gekennzeichnet, dass** die Querwölbung der Laufbahnkontur asymmetrisch ist.

9. Kugellager (1) nach einem der vorhergehenden Ansprüche, **dadurch gekennzeichnet, dass** die Querwölbung der Laufbahnkontur wenigstens einen Wendepunkt (W) aufweist.

10. Kugellager (1) nach Anspruch 9, **dadurch gekennzeichnet, dass** sich wenigstens ein Wendepunkt (W) der Querwölbung der Laufbahnkontur in der Nähe des Lagerspalts (2) befindet.

11. Kugellager (1) nach einem der vorhergehenden Ansprüche, **dadurch gekennzeichnet, dass** das Kugellager (1) ein Radiallager ist.

12. Kugellager (1) nach einem der vorhergehenden Ansprüche, **dadurch gekennzeichnet, dass** die Befestigungsbohrungen als Durchgangs- oder Sacklochbohrungen ausgebildet sind oder als Scklochbohrungen, die mit einem Innengewinde versehen sind.

13. Kugellager (1) nach einem der vorhergehenden Ansprüche, **dadurch gekennzeichnet, dass** die ebenen Anlageflächen beider Laufringe zum Anschluß an je ein Fundament, Chassis oder sonstiges Maschinen- oder Anlagenteil an beiden Laufringen in entgegengesetzten (Achs-) Richtungen weisen.

14. Kugellager (1) nach einem der vorhergehenden Ansprüche, **dadurch gekennzeichnet, dass** die ebenen Anlageflächen beider Laufringe zum Anschluß an je ein Fundament, Chassis oder sonstiges Maschinen- oder Anlagenteil an beiden Laufringen in entgegengesetzten (Achs-) Richtungen gegeneinander versetzt sind.

15. Kugellager (1) nach einem der vorhergehenden Ansprüche, **dadurch gekennzeichnet, dass** die ebene Anlagefläche eines Laufrings zum Anschluß an je ein Fundament, Chassis oder sonstiges Maschinen- oder Anlagenteil in (Achs-) Richtung des Kugellagers gegenüber der betreffenden Ringfläche des anderen Laufrings erhaben ist.

## Claims

1. A ball bearing (1) having a first and a second race (3, 4) and, disposed in the gap (2) between the two said races (3, 4), al least one row of balls (5) of radius R_{K} that roll along facing tracks (8, 9) of the two said races (3, 4), wherein the centers (M) of the balls (5) of a row move on a circular path (10) that is surrounded by a torus circumscribing all the balls (5) of said row and having the toroidal radius R_{K}, a toroidal angle coordinate ϕ and a poloidal angle coordinate θ, and wherein each track (8, 9) has with cach ball (5) two nearly punctiform contact areas or contact points (P₁, P₂; P₃ P₄) at the respective contact angle (θ_{P1}, θ_{P2}; θ_{P3} and θ_{P4}), and wherein in the region of said contact angles (θ_{P1}, θ_{P2}; θ_{P3} and θ_{P4}) the respective cross sections of the tracks have transverse curvatures possessing finite radii of curvature (R_{L1}...R_{L4}) cach of which is greater than the ball radius (R_{K}): R_{Lv} > R_{K}, wherein said transverse radius of curvature (R_{L}) of said track(s) (8, 9) is, in the vicinity of said contact angles (θ_{P1}, θ_{P2}; θ_{P3} and θ_{P4}), always a continuous and differentiable function of the poloidal angle coordinate θ: R_{L} - R_{L}(θ), wherein both races (3, 4) each comprise a respective planar contact face for connection to a foundation, frame or other machine part or system part, as well as fastening bores coronally distributed therein for connection to a foundation, frame or other machine part or system part, **characterized in that**
a) in the region of the contact angles, i.e., where θ_{Pv} - 5° < θ < θ_{Pv} + 5°, the track contour presents in each case an osculation S - (R_{K}/R_{L}) · 100% between 98% to 90%, wherein
b) the function R_{L}(θ) increases outward from the respective contact-angle region (θ_{P1}, θ_{P2}; θ_{P3} and θ_{P4}) in both poloidal directions: R_{L}(θ) ≥ R_{L}(θ_{Pv}), where appropriate even transforming to convex transverse radii of curvature R_{L} < 0.

2. The ball bearing (1) as in claim 1, **characterized in that** said track contour presents a finite osculation S = (R_{K}/R_{L}) · 100% ≠ 0, with the exception of any inflection points (W) of the track contour.

3. The ball bearing (1) as in claim 1 or 2, **characterized in that** in the region of the contact angles, i.e., where θ_{Pv} - 5° ≤ θ ≤ θ_{Pv} + 5°, the track contour presents in each case an osculation S = (R_{K}/R_{L})· 100% of 97% to 92%, particularly an osculation S of 96% to 94%.

4. The ball bearing (1) as in one of the preceding claims, **characterized in that** in the vicinity of the gap (2), the track contour presents an osculation S = (R_{K}/R_{L}) - 100% between 90% to 50%, preferably an osculation S of 90% to 60%, particularly an osculation S of 90% to 70%.

5. The ball bearing (1) as in claim 1, **characterized in that** the transverse curvature of the track(s) does not have a circular contour, particularly not even in segments, in the vicinity of the contact angle regions θ_{P1}, θ_{P2}; θ_{P3} and θ_{P4}.

6. The ball bearing (1) as in one of the preceding claims, **characterized in that** the transverse curvature of the track contour in the vicinity of the contact angle regions θ_{P1}, θ_{P2}; θ_{P3} and θ_{P4} follows a continuous and differentiable function, preferably a potential function or a progression or an exponential function or elliptical contour or a combination of two or more such functions.

7. The ball bearing (1) as in one of the preceding claims, **characterized in that** the transverse curvature of the track contour is symmetrical.

8. The ball bearing (1) as in one of the preceding claims, **characterized in that** the transverse curvature of the track contour is asymmetrical.

9. The ball bearing (1) as in one of the preceding claims, **characterized in that** the transverse curvature of the track contour has at least one inflection point (W).

10. The ball bearing (1) as in claim 9, **characterized in that** at least one inflection point (W) of the transverse curvature of the track contour is in the vicinity of the bearing gap (2).

11. The ball bearing (1) as in one of the preceding claims, **characterized in that** said ball bearing (1) is a radial bearing or an axial bearing.

12. The ball bearing (1) according to one of the preceding claims, **characterized in that** said bores are configured as through-bores or blind bores, or as blind bores, which are provided with an internal thread.

13. The ball bearing (1) according to one of the preceding claims, **characterized in that** said planar contact faces of both races for connection each to a respective foundation, frame or other machine part or system part point in opposite (axial) directions on the two races.

14. The ball bearing (1) according to one of the preceding claims, **characterized in that** said planar contact faces of both races for connection each to a respective foundation, frame or other machine part or system part are mutually offset in opposite (axial) directions on the two races.

15. The ball bearing (1) according to one of the preceding claims, **characterized in that** the planar contact face of one race for connection to a respective foundation, frame or other machine part or system part is elevated in the (axial) direction of said ball bearing relative to the respective ring face of the other said race.

## Revendications

1. Roulement à billes (1) comprenant une première et une seconde bague à billes (3, 4) et au moins une rangée de billes (5) de rayon Rₖ, disposées dans la fente (2) entre les deux bagues à billes (3, 4), qui roulent le long de chemins de roulement (8, 9), tournés les uns vers les autres, des deux bagues à billes (3, 4), en ce que les centres (M) des billes (5) d'une rangée se déplacent sur une trajectoire (10) qui est entourée par un tore circonscrit par toutes les billes (5) de cette rangée et présentant le rayon toroïdal Rₖ, une coordonnée d'angle toroïdale ϕ et une coordonnée d'angle poloïdale θ, et en ce que chaque chemin de roulement (8, 9) présente avec chaque bille (5) deux zones de contact ou points de contact (P₁, P₂ ; P₃ P₄) pratiquement ponctuels sous l'équerre respective (θ_{P1}, θ_{P2}; θ_{P3} et θ_{P4}), et en ce que les sections de chemin de roulement présentent dans la zone des équerres (θ_{P1}, θ_{P2} ; θ_{P3} et θ_{P4}) des courbures transversales de rayons de courbures finis (R_{L1} ... R_{L4}) qui sont respectivement supérieurs au rayon de bille (R_{K}) : R_{LV} > R_{K}, en ce que le rayon de courbure transversale (R_{L}) du/des chemin(s) de roulement (8, 9) dans l'environnement des équerres θ_{P1}, θ_{P2}; θ_{P3} et θ_{P4}) est à chaque fois une fonction continue et différentiable de la coordonnée d'angle poloïdale (θ) : R_{L} = R_{L}(θ), en ce que les deux bagues à billes (3, 4) présentent respectivement une surface d'appui plane pour l'assemblage à un bâti, à un châssis ou à une autre partie de machine ou d'installation ainsi que des trous de fixation qui y sont répartis en forme de couronne en vue du raccordement au bâti en question, au châssis ou à une autre partie de machine ou d'installation, **caractérisé en ce que**
a) le contour de chemin de roulement dans la zone des équerres, c'est-à-dire à θ_{Pv} - 5° ≤ θ ≤ θ_{Pv} + 5°, présente à chaque fois une osculation S = (R_{K}/R_{L})*100% entre 98% et 90%, **en ce que**
b) la fonction R_{L}(θ) augmente à chaque fois depuis la zone d'équerre respective (θ_{P1}, θ_{P2}; θ_{P3} et θ_{P4}) dans les deux directions poloïdales : R_{L}(θ) ≥ R_{L}(θ_{Pv}), le cas échéant voire jusqu'à des rayons de courbure transversale convexes R_{L} < 0.

2. Roulement à billes (1) selon la revendication 1, **caractérisé en ce que** le contour de chemin de roulement présente une osculation finie S = (R_{K}/R_{L})*100% ≠ 0, le cas échéant à l'exception de points d'inflexion (W) du contour de chemin de roulement.

3. Roulement à billes (1) selon la revendication 1 ou 2, **caractérisé en ce que** le contour de chemin de roulement dans la zone des équerres, c'est-à-dire à θ_{Pv} - 5° ≤ θ ≤ θ_{Pv} + 5°, présente à chaque fois une osculation S = (R_{K}/R_{L})*100% de 97% à 92%, en particulier une osculation S de 96% à 94%.

4. Roulement à billes (1) selon l'une des revendications suivantes, **caractérisé en ce que** le contour de chemin de roulement à proximité de la fente du roulement (2) présente une osculation S = (R_{K}/R_{L})*100% entre 90% et 50%, de préférence une osculation S de 90% à 60%, en particulier une osculation S de 90% à 70%.

5. Roulement à billes (1) selon la revendication 1, **caractérisé en ce que** la courbure transversale du/des chemin(s) de roulement dans l'environnement des zones d'équerre (θ_{P1}, θ_{P2}; θ_{P3} et θ_{P4}) ne présente pas de contour circulaire, en particulier même pas partiellement.

6. Roulement à billes (1) selon l'une des revendications précédentes, **caractérisé en ce que** la courbure transversale du contour de chemin de roulement dans l'environnement des zones d'équerre (θ_{P1}, θ_{P2} ; θ_{P3} et θ_{P4}) suit une fonction continue et différentiable, de préférence une fonction potentielle ou une série ou une fonction exponentielle ou un contour elliptique ou une combinaison de deux ou plusieurs fonctions de ce type.

7. Roulement à billes (1) selon l'une des revendications précédentes, **caractérisé en ce que** la courbure transversale du contour de chemin de roulement est symétrique.

8. Roulement à billes (1) selon l'une des revendications 1 à 6, **caractérisé en ce que** la courbure transversale du contour de chemin de roulement est asymétrique.

9. Roulement à billes (1) selon l'une des revendications précédentes, **caractérisé en ce que** la courbure transversale du contour de chemin de roulement présente au moins un point d'inflexion (W).

10. Roulement à billes (1) selon la revendication 9, **caractérisé en ce qu'**au moins un point d'inflexion (W) de la courbure transversale du contour de chemin de roulement se trouve à proximité de la fente de roulement (2).

11. Roulement à billes (1) selon l'une des revendications précédentes, **caractérisé en ce que** le roulement à billes (1) est un roulement radial.

12. Roulement à billes (1) selon l'une des revendications précédentes, **caractérisé en ce que** les trous de fixation sont formés en tant qu'alésages traversant ou borgnes ou en tant qu'alésages borgnes qui comportent un taraudage.

13. Roulement à billes (1) selon l'une des revendications précédentes, **caractérisé en ce que** les surfaces d'appui planes des deux bagues à billes pour l'assemblage à un bâti, à un châssis ou à une autre partie de machine ou d'installation au niveau des deux bagues à billes sont orientées en sens (d'axe) opposés.

14. Roulement à billes (1) selon l'une des revendications précédentes, **caractérisé en ce que** les surfaces d'appui planes des deux bagues à billes pour l'assemblage à respectivement un bâti, un châssis ou une autre partie de machine ou d'installation au niveau des deux bagues à billes sont décalées en sens (d'axe) opposés.

15. Roulement à billes (1) selon l'une des revendications précédentes, **caractérisé en ce que** la surface d'appui plane d'une bague à bille pour l'assemblage à respectivement un bâti, un châssis ou une autre partie de machine ou d'installation dans le sens (d'axe) du roulement à billes est convexe par rapport à la surface annulaire concernée de l'autre bague à bille.
